Europäisches Patentamt

European Patent Office

Office européen des brevets

(19)

(11) Publication number: 0 076 653
A1

# (12) EUROPEAN PATENT APPLICATION

(21) Application number: 82305212.1

(22) Date of filing: 30.09.82

(51) Int. Cl.³: C 08 F 10/00
C 08 F 4/64

(30) Priority: 30.09.81 JP 153992/81

(43) Date of publication of application:
13.04.83 Bulletin 83/15

(84) Designated Contracting States:
BE DE FR GB IT NL SE

(71) Applicant: TOA NENRYO KOGYO K.K.
1-1 Hitotsubashi, 1-Chome Chiyoda-Ku
Tokyo(JP)

(72) Inventor: Nomura, Takeshi
1902-5, Ooaza Kamekubo Ooi-machi
Iruma-gun Saitama-ken(JP)

(72) Inventor: Maruyama, Kouji
1902-5, Ooaza Kamekubo Ooi-machi
Iruma-gun Saitama-ken(JP)

(72) Inventor: Ueno, Hiroshi
398-1, Ooaza Haneo Namekawa-mura
Hiki-gun Saitama-ken(JP)

(72) Inventor: Inaba, Naomi
894-2-1-401, Ooaza Kozutsumi
Kawagoe-shi Saitama-ken(JP)

(72) Inventor: Uoda, Makoto
5024-270, Ooaza Kasahata
Kawagoe-shi Saitama-ken(JP)

(74) Representative: Northover, Robert Frank et al,
ESSO CHEMICAL LIMITED ESSO RESEARCH CENTRE
P.O. Box 1
Abingdon Oxfordshire, OX13 6BB(GB)

(54) Catalyst component and process for polymerization of olefins.

(57) A titanium containing catalyst component for polymerization of olefins is obtained by bringing a magnesium-containing solid obtained by contacting:
(a) metallic magnesium,
(b) a halogenated hydrocarbon represented by the formula RX (where R is an alkyl group, aryl group, or cycloalkyl group having 1 to 20 carbon atoms; and X is a halogen atom), and
(c) an alkoxy compound represented by the formula $X'_mC(OR')_{4-m}$ (where X' is a hydrogen atom, halogen atom, or alkyl group, aryl group, or cycloalkyl group having 1 to 10 carbon atoms; R' is an alkyl group, aryl group, or cycloalkyl group having 1 to 20 carbon atoms; and m is 0, 1, or 2),
into contact with an alcohol and organoaluminum compound, and subsequently bringing the resulting contact product into contact with a titanium compound.

Croydon Printing Company Ltd.

EP 0 076 653 A1

CATALYST COMPONENT AND PROCESS FOR POLYMERIZATION OF OLEFINS

This invention relates to a titanium containing catalyst component for polymerization of olefins, and more particularly, the invention relates to said catalyst component, said catalyst component in combination with a co-catalyst for the polymerization of olefins, and to the polymerization process. Particularly, the titanium is carried by a magnesium-containing solid of uniform particles.

A magnesium-containing solid has been shown to be useful as a carrier for Ziegler catalyst for olefin polymerization. It is desirable that such a solid be composed of uniform particles.

There has been proposed, for instance, a method of obtaining spherical particles by spraying an aqueous solution of magnesium chloride or molten $MgCl_2 \cdot 6H_2O$ (Japanese Patent Laid-Open Nos. 65999/1974, 38590/1977, and 41985/1979) and a method for using classified magnesium chloride powder (Japanese Patent Laid-Open No. 127185/1976).

In addition, several methods have been proposed for producing a magnesium-containing solid by, for example, bringing metallic magnesium, halogenated hydrocarbon, and electron donor compound (such as alcohol) into contact with one another (Japanese Patent Laid-Open No. 64586/1976), by reacting an organomagnesium compound and orthosilicate ester, and by reacting metallic magnesium, orthosilicate ester, and organic halide with one another (Japanese Patent Laid-Open No. 146292/1978).

The polymerization catalyst produced from a magnesium-containing solid prepared by these processes is not completely satisfactory with respect to particle shape, catalytic activity, and stereoregularity.

The present invention previously carried out a series of experiments which led to the findings that the magnesium-containing solid obtained by bringing metallic magnesium, a halogenated hydrocarbon, and an alkoxy compound represented by the formula $X'_m C(OR')_{4-m}$ (where X' is a hydrocarbon atom, halogen atom or an optionally substituted alkyl, aryl or cycloalkyl group having 1 to 10 carbon atoms; R' is an alkyl group, aryl group, or cycloalkyl group having 1 to 20 carbon atoms; and m is 0, 1 or 2) into contact with one another has an improved surface area and uniform particle configuration, and the catalyst component obtained by bringing this magnesium-containing solid into contact firstly with an organoaluminum compound (European Patent Application Publication No. 0053899) or an electron donor compound and hydrogen halide (European Patent Application Publication No 0053900) and in each case secondly with a titanium compound exhibits a high activity and high steroregularity in olefin polymerization.

In accordance with this invention, it has been discovered that the catalytic activity of the catalyst component prepared from the magnesium-containing solid can be significantly improved.

The gist of the present invention resides in a catalyst component for polymerization of olefins which is obtained by bringing the magnesium-containing solid obtained by contacting:

(a) metallic magnesium,

(b) a halogenated hydrocarbon represented by the formula RX (where R is an alkyl group, aryl group, or cycloalkyl group having 1 to 20 carbon atoms; and X is a halogen atom), and

(c) an alkoxy compound represented by the formula $X'_m C(OR')_{4-m}$ (where X' is a hydrogen atom, halogen atom, or an optionally substituted alkyl, aryl or cycloalkyl group having 1 to 10 carbon atoms; R' is an alkyl, aryl or cycloalkyl group having 1 to 20 carbon atoms; and m is 0, 1 or 2)

into contact with an alcohol and organoaluminum compound, and subsequently bringing the resulting product into contact with a titanium compound.

Metallic magnesium may be used in any form; however, metallic magnesium in the form of powder and chip is preferred. Prior to use, the metallic magnesium should preferably be washed with an inert hydrocarbon such as saturated aliphatic, alicyclic, or aromatic hydrocarbon having 6 to 8 carbon atoms and then heat-dried in the presence of an inert gas such as nitrogen.

The halogenated hydrocarbon is represented by the formula RX. Preferable compounds are chlorinated or brominated hydrocarbons in which R is an alkyl group, aryl group, or cycloalkyl group having 1 to 8 carbon atoms. Examples of such compounds include methyl, ethyl, isopropyl, n-butyl, n-octyl, and cyclohexyl chloride and bromide, and chlorobenzene, and o-chlorotoluene.

The alkoxy compound represented by the formula $X'_m C(OR')_{4-m}$ wherein m is 0, 1, or 2 includes, for example, the following compounds.

(1) Where m is 0, the compound is an orthocarbonic acid ester represented by the formula $C(OR')_4$. Examples of such compounds include methyl orthocarbonate $[C(OCH_3)_4]$, ethyl orthocarbonate $[C(OC_2H_5)_4]$, propyl orthocarbonate $[C(OC_3H_7)_4]$, butyl orthocarbonate $[C(OC_4H_9)_4]$, isobutyl orthocarbonate $[C(O-i-C_4H_9)_4]$, hexyl orthocarbonate $[C(OC_6H_{13})_4]$, and octyl orthocarbonate $[C(OC_8H_{17})_4]$.

(2) Where m is 1, the compound is an ortho-acid ester and derivatives thereof represented by the formula $X'C(OR')_3$. Examples of such compounds include, when X' is hydrogen, methyl orthoformate $[HC(OCH_3)_3]$, ethyl orthoformate $[HC(OC_2H_5)_3]$, propyl orthoformate $[HC(OC_3H_7)_3]$, butyl orthoformate $[HC(OC_4H_9)_3]$, isobutyl orthoformate $[HC(O-i-C_4H_9)_3]$, hexyl orthoformate $[HC(OC_6H_{13})_3]$, octyl orthoformate $[HC(OC_8H_{17})_3]$, and phenyl orthoformate $[HC(OC_6H_5)_3]$; when X' is an alkyl group, cycloalkyl group, or aryl group, methyl ortho-acetate $[CH_3C(OCH_3)_3]$, ethyl orthoacetate $[CH_3C(OC_2H_5)_3]$, methyl orthopropionate $[CH_3CH_2C(OCH_3)_3]$, ethyl orthopropionate $[CH_3CH_2C(OC_2H_5)_3]$, and others such as $C_6H_{11}C(OC_2H_5)_3$, $C_6H_5C(OC_2H_5)_3$, $C_6H_5C(OCH_3)_3$, $C_6H_5C(OC_3H_7)_3$, $C_7H_8C(OC_2H_5)_3$, and $C_8H_{11}C(OC_2H_5)_3$; when X' is alkyl group, cycloalkyl group, or aryl group with a hydrogen atom substituted with a halogen atom, ethyl orthobromoacetate $[CH_2BrC(OC_2H_5)_3]$, ethyl orthochloro-acetate $[CH_2Cl(OC_2H_5)_3]$, ethyl ortho $\alpha$-bromopropionate $CH_3CHBrC(OC_2H_5)_3]$, and ethyl ortho $\alpha$-chloropropionate $[CH_3CHClC(OC_2H_5)_3]$; and when X' is a halogen atom, methyl orthochloroformate $[ClC(OCH_3)_3]$, ethyl orthochloroformate $[ClC(OC_2H_5)_3]$, propyl orthochloroformate $[ClC(OC_3H_7)_3]$, isobutyl orthochloroformate $[ClC(O-i-C_4H_9)_3]$, octyl orthochloro-formate $[ClC(OC_8H_{17})_3]$, phenyl orthochloroformate $[ClC(OC_6H_5)_3]$ and ethyl orthobromoformate $[BrC(OC_2H_5)_3]$.

(3) Where m is 2, the compound is an acetal and derivatives thereof are represented by the formula $X'_2C(OR')_2$. Examples of such compounds include ethylidene dimethyl ether $[CH_3CH(OCH_3)_2]$, ethylidene diethyl ether $[CH_3CH(OC_2H_5)_2]$, methylal $[CH_2(OCH_3)_2]$,

methylene diethyl ether $[CH_2(OC_2H_5)_2]$, monochloroacetal $[CH_2ClCH(OC_2H_5)_2]$, dichloroacetal $[CHCl_2CH(OC_2H_5)_2]$, trichloroacetal $[CCl_3CH(OC_2H_5)_2]$, monobromoacetal $[CH_2BrCH(OC_2H_5)_2]$, monoiodoacetal $[CH_2ICH(OC_2H_5)_2]$, and benzaldehyde diethylacetal $[C_6H_5CH(OC_2H_5)_2]$.

Preferable among the above compounds are alkyl esters having 1 to 8 carbon atoms such as orthoformic acid esters, particularly methyl orthoformate, ethyl orthoformate, and butyl orthoformate.

The alcohol is one which is represented by the formula ROH, where R is an alkyl group, alkenyl group, cycloalkyl group, aryl group, or aralkyl group having 1 to 12 carbon atoms. Examples of such alcohols include methanol, ethanol, propanol, isopropanol, butanol, isobutanol, pentanol, hexanol, octanol, 2-ethylhexanol, cyclohexanol, benzyl alcohol, and allyl alcohol. Preferable among them are lower alkyl alcohols such as methanol, ethanol, isopropanol, and butanol.

The organolauminum compound is one which is represented by the formula $R''_nAlX_{3-n}$ (where R" is an alkyl or aryl group; X is a halogen atom, alkoxy group, or hydrogen atom; and n is an arbitrary number in the range of $1 \leq n \leq 3$). Examples of such compounds include alkyl aluminum compounds and mixtures or complex compounds thereof having 1 to 18 carbon atoms, preferably 2 to 6 carbon atoms, such as trialkyl aluminum, dialkyl aluminum monohalide, monoalkyl aluminum dihalide, alkyl aluminum sesquihalide, dialkyl aluminum monoalkoxide, and dialkyl aluminum monohalide. Specific examples include trialkyl aluminum such as trimethyl aluminum, triethyl aluminum, tripropyl aluminum, triisobutyl aluminum, and trihexylaluminum; dialkyl aluminum monohalide such as dimethyl aluminum chloride, diethyl aluminum chloride, diethyl aluminum bromide, diethyl aluminum iodide, and diisobutyl aluminum chloride; monoalkyl aluminum dihalide such as methyl aluminum dichloride, ethyl aluminum dichloride, ethyl aluminum dibromide, ethyl aluminum diiodide, and isobutyl aluminum dichloride; alkyl aluminum sesquihalide such as ethyl aluminum sesquichloride; dialkyl aluminum monoalkoxide such as dimethyl aluminum methoxide, diethyl aluminum ethoxide, diethyl aluminum phenoxide, dipropyl aluminum ethoxide, diisobutyl aluminum ethoxide, and diisobutyl aluminum phenoxide; and dialkyl aluminum hydride such as dimethyl aluminum hydride, diethyl aluminum hydride, dipropyl aluminum hydride, and diisobutyl aluminum hydride.

Preferable among the above organoaluminum compounds are triethyl aluminum and ethyl aluminum sesquichloride.

Any titanium compound used as a catalyst component for polymerization of olefins may be used as the titanium compound in this invention. Preferably the halides or organometal compounds of trivalent, or tetravalent titanium are employed, for example, titanium halide, titanium alkoxide, and titanium halide alkoxide. Examples of such titanium compounds include titanium tetrachloride, titanium tetrabromide, trichloroethoxytitanium, trichlorobutyoxytitanium, dichlorodiethoxytitanium, dichlorodiphenoxytitanium, chlorotriethoxytitanium, chlorotributoxytitanium, tetrabutoxytitanium, and titanium trichloride. Preferable among them are tetravalent titanium halides such as titanium tetrachloride, trichloroethoxytitanium, dichlorodibutoxytitanium, and dichlorodiphenoxytitanium. Titanium tetrachloride is particularly preferred.

The magnesium-containing solid is obtained by bringing the alkoxy compound, metallic magnesium, and halogenated hydrocarbon into contact with one another. The method for contact is not specifically limited. For example, the three ingredients may be brought into contact with one another all at once; metallic magnesium can be first brought into contact with a halogenated hydrocarbon and then the resulting product brought into contact with an alkoxy group, or by bringing a Grignard reagent into contact with an alkoxy compound. (Grignard Reagents are represented by $ClMgCH_3$, $ClMgC_2H_5$, $ClMgC_3H_7$, $ClMgC_4H_9$, $ClMgi-C_4H_9$, $ClMgC_6H_{13}$, $ClMgC_8H_{17}$, $BrMgC_2H_5$, $BrMgC_4H_9$, $BrMgi-C_4H_9$, $IMgC_4H_9$, $ClMgC_6H_5$, and $BrMgC_6H_5$, which are obtained by bringing metallic magnesium and a halogenated hydrocarbon into contact with each other); metallic magnesium can be suspended in a solution of alkoxy compound, and to this suspension is added a solution of halogenated hydrocarbon; an alkoxy compound and a halogenated hydrocarbon can be brought into contact with each other, and to this resulting product is added metallic magnesium. The third method is particularly preferred.

The alkoxy compound and metallic magnesium are used in such a ratio that one or more, preferably from 3 to 5, OR' groups in the alkoxy compound for one magnesium atom is metallic magnesium. In the case of alkoxy compounds represented by $X'_2C(OR')_2$, more than 0.5 mol, particularly from 1.5 to 2.5 mol of alkoxy compound for 1 gram-atom of magnesium is the preferred range. In the case of alkoxy compound represented by $X'C(OR')_3$, more than 1/3 mol, particularly from 1 to 5/3 mol is the preferred range. The halogenated hydrocarbon should preferably be used in an amount of from 1 to 2 mol for 1 gram-atom of magnesium.

These contact reactions may be accomplished by stirring the ingredients at 40 to 250°C, for from 1 to 10 hours. This reaction may also be performed in the presence of an inert hydrocarbon used for drying the metallic magnesium, e.g., aliphatic, alicyclic, or aromatic hydrocarbon having 6 to 8 carbon atoms. It is preferable not to use an ether, alcohol, and the like compounds which contain oxygen.

These reactions may be promoted by using inorganic halides such as iodine, alkyl iodide, calcium chloride, copper chloride, manganese chloride, and hydrogen halide.

The solid prepared as above mentioned is separated from the reaction system and is used as the magnesium-containing solid, as it is, or after washing with an inert hydrocarbon and drying or without drying.

The magnesium-containing solid thus obtained is very uniform in particle size. The specific surface area as measured by BET method is greater than 200 $m^2$/g, and the pore volume is greater than 0.15 cc/g. The composition is 5 to 25 wt% of magnesium atom and 3 to 70 wt% of halogen atom, with the remainder being organic compounds.

The catalyst component of this invention is obtained by bringing the magnesium-containing solid obtained as above mentioned into contact with an alcohol and an organoaluminum compound, and then bringing the contact product into contact with a titanium compound.

(1) Contact with alcohol and organoaluminum compound:

The magnesium-containing solid may be brought into contact with an alcohol and organoaluminum compound in any manner. For example, the magnesium-containing solid and an alcohol can be brought into contact with each other, and then the product is brought into contact with an organoaluminum compound; the magnesium-containing solid can be brought into contact with the product of contacting an alcohol and organoaluminum compound; the magnesium containing solid can be brought into contact with an organoaluminum compound and then the product brought into contact with an alcohol; a magnesium-containing solid, alcohol, and organoaluminum compound can be brought into contact with one another all at once.

These contact processes may be accomplished by stirring the suspension or solution of the above ingredients in an inert hydrocarbon such as aliphatic, alicyclic, or aromatic hydrocarbon having 5 to 12 carbon atoms, e.g., pentane, hexane, heptane, octane, cyclohexane, benzene, toluene, and xylene (slurry method), or by mechanically copulverizing the above ingredients in the presence or absence of the above-mentioned inert hydrocarbon (copulverization method).

Preferred methods are: (1) a magnesium-containing solid is brought into contact with an alcohol and then the product is brought into contact with an organoaluminum compound by the slurry method; and (2) a magnesium-containing solid is brought into contact with the copulverized product of the alcohol and organoaluminum compound.

The crusher for copulverization method includes rotary ball mills, vibration ball mills, and impact mills. Copulverization may be accomplished, as required, under reduced pressure or in an atomsphere of inert gas, and in the state in which moisture and oxygen are not substantially present.

The magnesium-containing solid, alcohol, and organoaluminum compound are used in such ratios that alcohol is present in an amount of from 1 gram mol to 50 gram mol or more, particularly from 2 to 20 gram mol for 1 gram-atom of magnesium in the magnesium-containing solid, and organoaluminum compound is from 0.1 to 10 gram equivalent, particularly from 0.2 to 5 gram equivalent for 1 hydroxyl group in 1 gram mol of the alcohol used.

The inert hydrocarbon should preferably be used in such an amount that the liquid substance is 1 to 10 liters per 100 g of the solid substance (mainly magnesium-containing solid) in the catalyst system.

The contact temperature and contact time for the magnesium-containing solid, alcohol, and organoaluminum compound vary depending on the contact method. In the above-mentioned slurry method (1), the contact of a magnesium-containing solid and alcohol is accomplished at about room temperature to about 200°C for from 5 minutes to 5 hours, and the contact with an organoaluminum compound can be accomplished at about room temperature (or with heating) for from 5 minutes to 10 hours. In the above-mentioned copulverization method (2), the contact of a magnesium-containing solid and the contact product of alcohol and organoaluminum compound is accomplished at from 0 to 200°C for from 0.5 to 50 hours, preferably at from 20 to 100°C for from 1 to 30 hours.

In the above-mentioned method (2), the contact product of alcohol and organoaluminum compound may be prepared by bringing an alcohol and an organoaluminum compound into contact with each other as they are, but preferably in the presence of the above-mentioned inert hydrocarbon. The contact should be accomplished at from -20 to +100°C for from 5 minutes to 10 hours, preferably at from -10 to +80°C for from: 0.5 to 3 hours. Preferably, the contact should be performed at a low temperature at the initial stage and then the temperature is increased after the passage of a certain period of time. Temperature rise may be performed in several steps. After completion of contact, the inert hydrocarbon and other substances are removed by distillation (in vacuo) or by other well known separation methods to yield the contact product in the form of a solid.

The solid substance thus obtained by bringing a magnesium-containing solid, alcohol, and organoaluminum compound into contact with one another is then brought into contact with a titanium compound after, if required, washing with the above-mentioned inert hydrocarbon.

(2) Contact with a titanium compound

The contact product obtained in the above step may be brought into contact with a titanium compound in any manner. Preferably, contact is accomplished by mixing the solid substance or a suspension of the solid substance in an inert hydrocarbon such as hexane, heptane, octane, cyclohxane, benzene, toluene, and xylene, with a titanium compound or a suspension or solution of a titanium compound in the above-mentioned hydrocarbon, at from 0 to - 200°C for from 5 minutes to - 10 hours, preferably at from 30 to 120°C for from 20 minutes to 5 hours.

The titanium compound is used for the solid substance in such an amount that titanium is present in an amount of from 0.01 gram-atom to 200 gram atom or more, particularly from 0.1 to 100 gram-atom for 1 gram-atom of magnesium contained in the contact product. Contact with a titanium compound may be repeated more than one time.

The resulting solid substance thus obtained by bringing the contact product and titanium compound is then washed, if required, with an inert hydrocarbon such as hexane, heptane, octane, cyclohexane, benzene, toluene, xylene, and kerosene, and then dried if desirable, to yield the catalyst component of this invention.

The catalyst component of this invention has a surface area greater than 250 $m^2/g$ as measured by BET method at the adsorption temperature of liquid nitrogen, and a pore volume greater than 0.20 cc/g, and is uniform in particle size. It is composed of 5 to 30 wt% of magnesium atom, 2 to 10 wt% of titanium atom, and 40 to 80 wt% of halogen atom, with the remainder being organic compounds.

The catalyst component of this invention yields a highly active catalyst for olefin polymerization when combined with an organoaluminum compound as cocatalyst.

Any organoaluminum compound which is used as a cocatalyst for Ziegler catalysis may be used for this purpose. For instance, any one of the organoaluminum compounds represented by the formula $R''_n AlX_{3-n}$, which were used for contact with the magnesium-containing solid as mentioned above, may be used.

Preferable among them are trialkyl aluminum, particularly triethyl aluminum and triisobutyl aluminum. These trialkyl aluminums may be used in combination with other organoaluminum compounds such as commercially available diethyl aluminum chloride, ethyl aluminum dichloride, ethyl aluminum sesquichloride, diethyl aluminum ethoxide, and diethyl aluminum hydride, and mixtures thereof or complex compounds thereof.

Moreover, the organoaluminum compound may be used alone or in combination with an electron donor compound for improving the catalytic activity and other purposes. Examples of such electron donor compounds include carboxylic acids; carboxylic acid esters; alcohols; ethers; ketones; amines; amides; nitriles; aldehydes; alcoholates; phosphorus, arsenic, and antimony compounds connected with an organic group through a carbon or oxygen atom; phosphoramides; thioethers; thioesters; and carbonic acid esters. Preferable among them are carboxylic acid esters, alcohols, and ethers.

Examples of carboxylic acid esters include butyl formate, ethyl acetate, butyl acetate, ethyl acrylate, ethyl butyrate, isobutyl isobutyrate, methyl methacrylate, diethyl maleate, diethyl tartrate, ethyl cyclohexane carboxylate, ethyl benzoate, ethyl p-methoxybenzoate, methyl p-methylbenzoate, ethyl p-t-butylbenzoate, dibutyl phthalate, diallyl phthalate, and ethyl $\alpha$-naphthoate. The invention, however, is not limited to them. Preferable among them are alkyl esters of aromatic carboxylic acids, particularly, 1- to 8-carbon alkyl esters of nuclear-substituted benzoic acid such as p-methyl benzoate and p-methoxy benzoate.

The alcohols represented by the formula ROH, which were used as mentioned above for contact with the magnesium-containing solid, may be used.

The ethers are represented by the formula ROR', where R and R' are alkyl, alkenyl, cycloalkyl, aryl, and aralkyl group having 1 to 12 carbon atoms, and R and R' may be the same or different. Examples of such ethers include diethyl ether, diisopropyl ether, dibutyl ether, diisobutyl ether, diisoamyl ether, di-2-ethylhexyl ether, diallyl ether, ethyl allyl ether, butyl allyl ether, diphenyl ether, anisole, and ethyl phenyl ether. These electron donor compounds may be used when an organoaluminum compound is used in combination with the catalyst component, or may be used after previous contact with an organoaluminum compound.

The organoaluminum compound is used in an amount of from 1 to 2000 gram mol, preferably from 20 to 500 gram mol per 1 gram atom of titanium in the catalyst component of this invention.

The organoaluminum compound and the electron donor compound are used in a ratio of from 0.1 to 40 gram-atom, preferably from 1 to 25 gram-atom of the former to 1 mol of the latter.

The catalyst composed of a catalyst component obtained as above and an organoaluminum compound (and optionally and electron donor compound) is useful for homopolymerization of a monoolefin or for copolymerization of a monoolefin and another monoolefin or a diolefin. It is particularly useful for homopolymerization of ethylene or for random or block copolymerization of ethylene and $\alpha$-olefin having 3 to 10 carbon atoms such as propylene, 1-butene, 4-methyl-1-pentene, 1-hexene, and 1-octene.

The polymerization reaction may be accomplished in either the gas phase or liquid phase. The liquid phase polymerization may be performed in an inert hydrocarbon such as n-butane, isobutane, n-pentane, isopentane, hexane, heptane, octane, cyclohexane, benzene, toluene, and xylene, or in the liquid monomer. The polymerization temperature is usually in the range from -80°C to +150°C, preferably from 40 to 120°C. The polymerization pressure is 1 to 60 atm. The molecular weight of the resulting polymer may be adjusted by hydrogen or other known molecular weight modifier. The quantity of the olefin to be copolymerized is usually in the range of up to 30 wt%, particularly from 0.3 to 15 wt%. The

polymerization reaction using the catalyst system of this invention may be performed continuously or batchwise under the conditions which are normally employed.

The catalyst component of this invention has a large specific surface area and a large pore volume. The catalyst for olefin polymerization prepared from the catalyst component of this invention has a high activity and is effective when a small quantity of hydrogen is added as a molecular weight modifier to produce a polymer of lower molecular weight (high melt index). By using the catalyst component of this invention, it is possible to minimize the decrease of catalytic activity resulting from use of hydrogen. In addition, the catalyst component of this invention provides a powdery polymer which is high in bulk density and therefore is easy to handle.

Examples:

The invention is described in detail with reference to the following non-limitative examples. Percent (%) used in the examples is wt%, unless otherwise specified.

The specific surface area (S.A.), pore volume (P.V.), and mean pore radius (M.P.R.) of the magnesium-containing solid and catalyst component were measured with SORPTOMATIC, Model 1810, (a product of CARLO ERBA).

The catalytic activity Kc is expressed by the quantity (g) of polymer formed by 1 g of the catalyst. The specific catalyst activity indicates the quantity (g) of polymer formed per 1 g of the catalyst for 1 hour of polymerization under a monomer partial pressure 1 kg/cm$^2$.

The melt index (MI) of the resulting polymer was determined at 190°C under a load of 2.16 kg according to ASTM D1238.

The bulk density was determined according to ASTM D1895-69, Method A.

Example 1

Preparation of Magnesium-Containing Solid:

Into a 1-liter reactor equipped with a reflux condenser were charged in a nitrogen atmosphere 12.8 g (0.53 mol) of metallic magnesium in the form of chips (purity: 99.5%, average particle diameter: 1.6 mm) and 250 ml of n-hexane. After stirring at 68°C for 1 hour, the metallic magnesium was removed and dried in vacuo at 65°C to yield activated metallic magnesium.

To this metallic magnesium was added 88 ml (0.53 mol) of ethyl orthoformate and 0.2 ml of 10% iodine solution in methyl iodide (as an accelerator). While keeping the resulting suspension at 55°C, 5 ml of a solution prepared by dissolving 80 ml (0.8 mol) of n-butyl chloride in 100 ml of n-hexane was added dropwise. After stirring for 50 minutes, the remainder of the solution was added dropwise over 80 minutes. The reaction was carried out with stirring at 70°C for 4 hours to yield a solid reaction product.

This reaction product was washed six times, each time with 300 ml of n-hexane at 50°C, and then dried in vacuo at 60°C for 1 hour to yield 55.6 g of white powdery magnesium-containing solid. This solid was found to contain 22.5% of magnesium and 34.0% of chlorine. The specific surface area (S.A.) was 230 $m^2$/gm the pore volume (P.V.) was 0.15 cc/g, and the mean pore radius (M.P.R.) was 15 Å.

Preparation of catalyst component:

Treatment with ethanol;

Into a 300-ml reactor equipped with a reflux condenser were charged in a nitrogen atmosphere 2.2 g of the magnesium-containing solid obtained in the above step and 100 ml of n-heptane. Then, 5.5 ml (94.5 mmol) of ethanol dissolved in 10 ml of n-heptane was added dropwise. The reactants were stirred at 65°C for 1 hour.

Treatment with ethyl aluminum sesquichloride:

The contact product obtained in the above step was cooled to room temperature, and then 7.1 ml (63.0 mmol) of ethyl aluminum sesquichloride dissolved in 10 ml of n-heptane was added dropwise, followed by stirring at room temperature for 1 hour.

Treatment with titanium tetrachloride;

Subsequently, 12.5 ml (113.7 mmol) of titanium tetrachloride dissolved in 10 ml of n-heptane was added dropwise, and the reactants were stirred for 3 hours at the reflux temperature of n-heptane. After removal of the liquid by decantation, the remaining solid substance was washed six times, each time with 150 ml of n-hexane at 65°C, and then dried in vacuo at 50°C for 1 hour to yield a catalyst component containing 4.62% of titanium, 17.6% of magnesium, and 61.6% of chlorine, and having a specific surface area of 292 $m^2$/g and a pore volume of 0.27 cc/g.

Example 2

Preparation of Catalyst Component:

A catalyst component containing 5.1% of titanium was prepared in the same manner as in Example 1 except that ethyl aluminum sesquichloride was replaced by 7.9 ml (63 mmol) of diethyl aluminum chloride.

Example 3

Preparation of Catalyst Component:

A catalyst component containing 4.8% of titanium was prepared in the same manner as in Example 1 except that ethanol was replaced by 8.6 ml (94.5 mmol) of n-butanol.

Examples 4 and 5

Preparation of Catalyst Component:

Catalyst components containing titanium as shown below were prepared in the same manner as in Example 1 except that ethanol was used in the amounts indicated below.

| Example | Ethanol (mmol) | Titanium content (%) |
|---|---|---|
| 4 | 189.0 | 3.8 |
| 5 | 31.5 | 10.7 |

Example 6

Preparation of Catalyst Component:

Preparation of reaction product of ethanol and ethyl aluminum sesquichloride:

Into a 500-ml reactor equipped with a reflux condenser were charged 14.8 ml (253.5 mmol) of ethanol dissolved in 200 ml of n-heptane. The reactants were cooled to -5°C. While stirring under a nitrogen atomsphere, 19.2 ml (169 mmol) of ethyl aluminum sesquichloride dissolved in 20 ml of n-heptane was added dropwise at -5°C. Stirring was continued at the same temperature for 30 minutes. The reaction liquid was heated to 65°C over 2 hours, and stirring was continued at the same temperature for 1 hour.

The volatile matter was distilled out in vacuo at 65°C to yield 22.3 g of white solid substance.

Contact with magnesium-containing solid and above reaction products:

8.7 of the magnesium-containing solid obtained in Example 1 and 9.1 g of the reaction product obtained in the above step were placed under a nitrogen atomsphere into a 1-liter stainless steel (SUS 32) mill pot containing 340 pieces of stainless steel balls 12 mm in diameter. This mill pot was shaken on a shaker for 15 hours to effect contact and yield the pulverized product.

Treatment with titanium tetrachloride:

Subsequently, 5.1 g of the crushed product obtained in the above step was placed in a 300-ml reactor equipped with a reflux condenser, and 12.5 ml (113.7 mmol) of titanium tetrachloride dissolved in 120 ml of n-heptane was added dropwise. The reactants were stirred for 2 hours at the reflux temperature of n-heptane. After removal of the liquid by decantation, the remaining solid substance was washed six times, each time with 150 ml of n-hexane at 65°C, and then dried in vacuo at 50°C for 1 hour to yield 4.8 g of a catalyst component containing 5.6% of titanium, 16.9% of magnesium, and 59.6% of chlorine.

Referential Example Preparation of catalyst component:

Treatment of diethylaluminum chloride:

Into the same reactor as used in Example 1 were charged with stirring in a nitrogen atmosphere 10.3 g of the magnesium-containing solid obtained in Example 1 and 200 ml of n-heptane. 11.6 g of diethyl aluminum chloride was added and contact treatment was carried out at 65°C for 1 hour. The resulting solid substance was separated and washed three times, each time with 200 ml of n-hexane at 65°C.

Treatment with titanium tetrachloride:

To the solid substance was added 100 ml of titanium tetrachloride. After stirring at 90°C for 3 hours, excess titanium tetrachloride was removed. Subsequently, the solid substance was filtered out at 90°C, and the filtered solid substance was washed six times, each time with 200 ml of n-hexane at 65°C, followed by drying in vacuo at 50°C for 1 hour to yield 10.4 g of a catalyst component containing 4.9% of titanium and having a specific surface area of 342 m$^2$/g and a pore volume of 0.34 cc/g.

Application Example 1 Polymerization of ethylene:

Into a 1.5-liter stainless steel (SUS 32) autoclave equipped with a stirrer were charged in a nitrogen atmosphere 12.15 mg of the catalyst component obtained in Example 1, 0.7 mmol of triisobutyl aluminum, and 390 g of isobutane. The polymerization system was heated to 85°C. Hydrogen was introduced into the autoclave to the extent that the partial pressure of hydrogen reached 2.0 kg/cm$^2$. Ethylene was introduced to the extent that the ethylene partial pressure reached 5.0 kg/cm$^2$. Ethylene was supplied continuously to carry out polymerization for 60 minutes while keeping constant the total pressure of the polymerization system. After completion of polymerization, the solvent and unreacted ethylene were purged and white powdery polymer was collected. The polymer was dried at 70°C for 10 hours in vacuo. Thus, 224 g of polyethylene powder having an MI of 0.35 and a bulk density of 0.37 g/cc was obtained. The catalytic activity Kc was 18,440 and the specific catalytic activity was 3,690.

Application Examples 2 to 6 Polymerization of Ethylene:

Ethylene was polymerized as in Application Example 1 except that the catalyst components obtained in Examples 2 to 6 were used. The results are shown in Table 1.

Application Example 7 Polymerization of Ethylene:

Ethylene was polymerized as in Application Example 1 except that 21.1 mg of the catalyst component obtained in Referential Example was used. The results are shown in Table 1.

TABLE 1

Catalytic activity

| Application Example | Kc | Specific Activity | MI | Bulk Density |
|---|---|---|---|---|
| 2 | 13,190 | 2,640 | 0.11 | 0.32 |
| 3 | 9,600 | 1,920 | 0.29 | 0.33 |
| 4 | 11,250 | 2,250 | 0.12 | 0.30 |
| 5 | 7,930 | 1,590 | 0.13 | 0.33 |
| 6 | 17,070 | 3,410 | 0.27 | 0.29 |
| 7 | 10,900 | 2,180 | 0.43 | 0.30 |

CLAIMS

1.  A titanium containing catalyst component for polymerization of olefins comprising a magnesium-compound solid obtained by contacting:

  (a)  metallic magnesium,

  (b)  a halogenated hydrocarbon represented by the formula RX, wherein R is an alkyl group, aryl group, or cycloalkyl group having 1 to 20 carbon atoms and X is a halogen atom, and

  (c)  an alkoxy compound represented by the formula $X'_mC(OR')_{4-m}$, wherein X' is a hydrogen atom, or an optionally substituted alkyl, aryl or cycloalkyl group having 1 to 10 carbon atoms; R' is an alkyl group, aryl group, or cyclogalkyl group having 1 to 20 carbon atoms; and m is 0, 1 or 2,

into contact with an organoaluminum compound, which magnesium-containing solid is subsequently contacted with a titanium compound characterized in that the magnesium-containing solid is contacted with an alcohol and the organo-aluminum compound prior to being contacted with the titanium compound.

2.  A titanium containing catalyst component according to claim 1 in which the magnesium-containing solid is brought into contact with the alcohol and thereafter the product is brought into contact with the organoaluminum compound by a slurry method.

3.  A titanium containing catalyst to claim 1, in which the magnesium containing solid is brought into contact with a copulverized product of the alcohol and the organoaluminum compound.

4.  A titanium-containing catalyst according to claim 3, in which the alcohol and the organoaluminum compound are copulverized in the presence of an inert hydrocarbon.

5.  A catalyst for the polymerization of olefins comprising the catalyst component of claims 1-4 and an organoaluminum compound reopresented by the formula $R''_n AlX_{3-n}$, wherein R" is an alkyl or aryl group; X is a halogen atom, alkoxy group, or hydrogen atom; and n is a number in the range $1 \leq n \leq 3$.

6.  A process for the polymerization of olefins in which one or more olefins are contacted uner polymerization conditons as claimed in claim 5.

## EUROPEAN SEARCH REPORT

European Patent
Office

### DOCUMENTS CONSIDERED TO BE RELEVANT

| Category | Citation of document with indication. where appropriate, of relevant passages | Relevant to claim | CLASSIFICATION OF THE APPLICATION (Int. Cl. 3) |
|---|---|---|---|
| Y | --- <br> GB-A-2 057 443 (TOA NENRYO KOGYO) <br> *Claims 1-17; abstract; page 2, line 65 - page 5, line 1* | 1,6 | C 08 F 10/00 <br> C 08 F 4/64 |
| Y,D | --- <br> CHEMICAL ABSTRACTS, vol. 85, no. 16, 18th October 1976, page 17, no. 109199c, Columbus Ohio (USA); <br> & JP - A - 76 64 586 (MITSUI PETROCHEMICAL INDUSTRIES LTD.) (04-06-1976) *Abstract* | 1,2,5, 6 | |
| | ----- | | |

TECHNICAL FIELDS
SEARCHED (Int. Cl. 3)

C 08 F 10/00
C 08 F 10/02
C 08 F 10/04
C 08 F 10/06
C 08 F 10/08
C 08 F 10/10
C 08 F 10/12
C 08 F 10/14
C 08 F 110/00
C 08 F 110/02
C 08 F 110/04
C 08 F 110/06
C 08 F 110/08
C 08 F 110/10
C 08 F 110/12
C 08 F 110/14
C 08 F 210/00
C 08 F 210/02
-/-

The present search report has been drawn up for all claims

| Place of search <br> THE HAGUE | Date of completion of the search <br> 14-01-1983 | Examiner <br> WEBER H. |
|---|---|---|

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03.82